# EUROPÄISCHE PATENTANMELDUNG

(11) **EP 0 697 771 A1**
(43) Veröffentlichungstag der Anmeldung: **21.02.1996**
(21) Anmeldenummer: 95109523.1
(22) Anmeldetag: 20.06.1995
(51) Int. Cl.: H04B 1/38, H01Q 1/24, H01R 13/639

(54) **Adapter für ein Funkgerät und Halteklammer dazu**

(30) Priorität: 16.07.1994 DE 4425263
(71) Anmelder: ROBERT BOSCH GMBH, D-70442 Stuttgart (DE)
(72) Erfinder: Birkl, Gérard-Emile, Dipl.-Ing., D-12051 Berlin (DE)

(57) **Zusammenfassung**

Es wird ein Adapter (1) für ein tragbares Funkgerät (3) vorgeschlagen, der an den Antennenausgang des Funkgerätes angeschlossen wird. Der Adapter weist einen Ausgang für eine Mobilfunkantenne auf sowie eine Antennenbuchse (4), an die eine externe Antenne anschließbar ist. Dadurch ist es nicht mehr notwendig, Handfunkgeräte mit einer zusätzlichen Steckbuchse für externe Antennen zu versehen. Des weiteren wird eine Halteklammer vorgeschlagen, mittels der eine sichere Befestigung des Antennenkabels (30) an die Antennenbuchse (4) ermöglicht wird.

## Beschreibung

### Stand der Technik

Die Erfindung geht aus von einem Adapter für ein tragbares Funkgerät nach der Gattung des Patentanspruchs 1 und einer Halteklammer nach Anspruch 12.

Bekannte Handfunkgeräte weisen üblicherweise lediglich eine fest mit dem Funkgerät verbundene Antenne auf, da diese Funkgeräte üblicherweise nur tragbar benutzt werden. Sollen diese Funkgeräte auch in Ausnahmefällen für mobile Zwecke verwendet werden, so weisen solche Funkgeräte eine zusätzliche Antennenbuchse auf, an die eine externe Antenne anschließbar ist. Die Antenne des Handfunkgerätes muß dann entfernt werden. Wird ein Handfunksprechgerät mit einer zusätzlichen Antennenbuchse versehen, so besteht jedoch die Notwendigkeit, diese Antennenbuchse zu schützen, so daß nicht Schmutz in das Gerät gelangen kann. Eine zusätzliche Antennenbuchse ist daher mit einem spürbaren Mehraufwand verbunden.

### Vorteile der Erfindung

Der erfindungsgemäße Adapter mit den Merkmalen des Anspruchs 1 hat demgegeüber den Vorteil, daß ein Funkgerät nicht mit einer weiteren Antennenbuchse versehen werden muß und trotzdem für mobile Zwecke verwendbar ist. Ist neben dem tragbaren Einsatz ein mobiler Einsatz oder ein Einsatz als Feststation vorgesehen, so wird der Adapter zwischen dem Antennenausgang des Handfunksprechgerätes und der Antenne geschaltet, so daß nur die Handfunkgeräte mit einem entsprechenden Adapter auszustatten sind, die auch tatsächlich für einen Mobil- oder Feststationbetrieb vorgesehen sind.

Durch die Unteransprüche ergeben sich vorteilhafte Weiterbildungen und Verbesserungen des Adapter gemäß Hauptanspruch.

Vorteilhaft ist, daß der Adapter einen Zapfen aufweist, der in eine Öffnung zur Aufnahme der Antenne des Funkgerätes einbringbar ist, daß der Zapfen ein Gewinde aufweist. Durch die Verschraubung ist eine besonders sichere Verbindung des Adapters mit dem Funkgerät gegeben. Ein versehentliches Lösen des Adapters ist nahezu ausgeschlossen. Vorteilhaft ist weiterhin, daß durch das Einführen eines Steckers in die Antennenbuchse die Verbindung zwischen dem Anschluß für die mobile Funkantenne und den Anschluß für das Funkgerät unterbrechbar ist. Dadurch wird der Betrieb des Handfunkgerätes sehr sicher, es können nicht unerwünschte Stehwellenverhältnisse auftreten, weil beispielsweise zwei Antennen am Funkgerät angeschlossen sind. Die Unterbrechung des Anschlusses erfolgt vorzugsweise über einen Schaltkontakt, gegen den die Steckerspitze des in die Antennenbuchse eingebrachten Steckers drückt. Dadurch wird der mechanische Aufwand sehr gering gehalten. Vorteilhaft ist ebenfalls, an dem Adapter eine Feder anzubringen, die mit dem metallischen Außenkontakt der Antennenbuchse in Verbindung steht. Diese Feder wirkt auf das metallische Gehäuse des Funkgerätes ein, so daß auch koaxiale Kabel an den Adapter anschließbar sind. Die tragbare Funkgeräteantenne ist vorzugsweise in eine Buchse des Adapters einbringbar, die ein Gewinde aufweist, wobei dieses Gewinde dem Gewinde der Buchse des Funkgerätes entspricht. Dadurch ergibt sich eine sehr sichere Verbindung des Adapters mit der Funkgeräteantenne, wobei sich als zusätzlicher Vorteil ergibt, daß neben dem Adapter keine weiteren Zusatzgeräte erforderlich sind.

Die erfindungsgemäße Halteklammer nach Anspruch 12 hat den Vorteil, daß das Antennenkabel der Zusatzantenne sicher an dem Adapter befestigt werden kann, ohne daß ein Abrutschen des Antennenkabels zu befürchten ist. Durch die federnden Wirkungen der Teile ist es nämlich möglich, diese um den Adapter zu schieben, wobei die Rastnasen bewirken, daß die Halteklammer sicher an dem Adapter anbringbar ist. Ein Ausrutschen des Antennenkabels wird dadurch verhindert. Vorteilhaft ist es auch, daß die federnd miteinander verbundenen Teile an der der Klammerung abgewandten Seite eine Druckfeder aufweisen, so daß ein sicherer Sitz der Klammer bewirkt wird. Weiterhin ist es vorteilhaft, seitlich und mittig Führungsschienen- und -nasen anzubringen, so daß die Halteklammer auch dann sicher zu befestigen ist, wenn die Befestigung von ungeübten Personen oder in Hektik erfolgt.

### Zeichnung

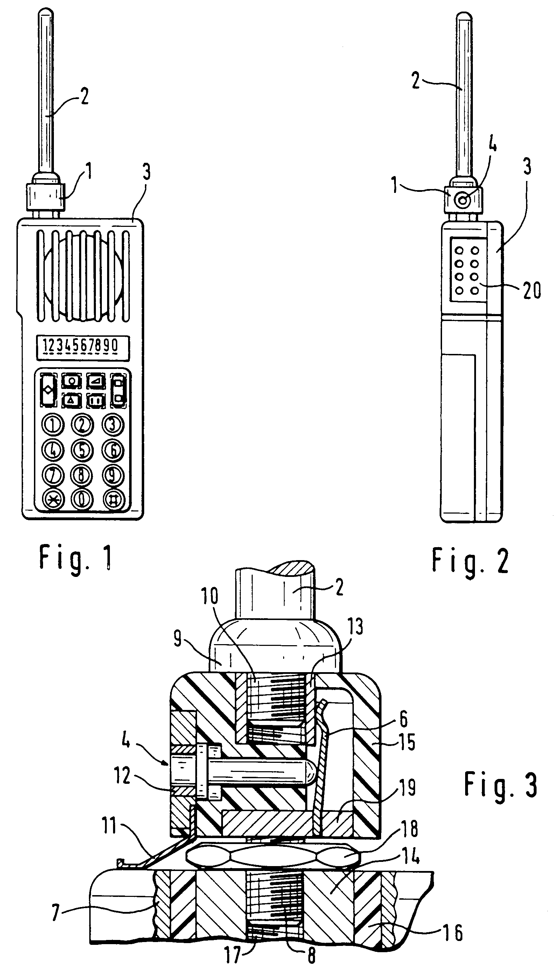

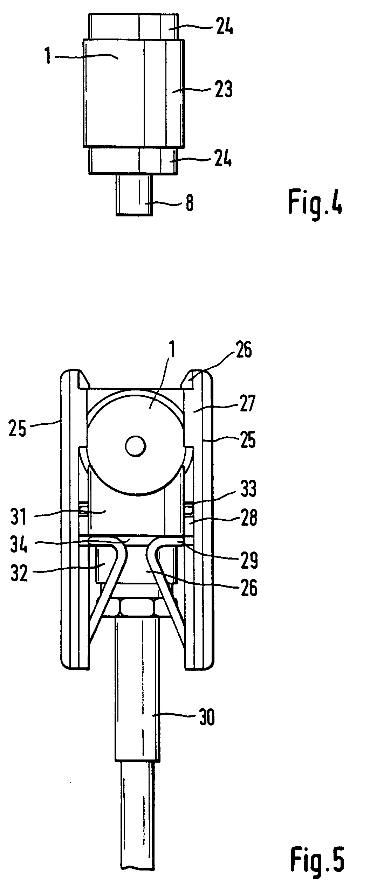

Ein Ausführungsbeispiel der Erfindung ist in nachfolgenden Zeichnungen näher erläutert. Es zeigen Figur 1 die Vorderansicht eines Funkgerätes mit Adapter, Figur 2 die Seitenansicht eines Funkgeräts mit Adapter, Figur 3 Einzelheiten des Adapters im Schnitt, Figur 4 eine weitere Ausgestaltung des Adapters und Figur 5 einen Adapter gemäß Figur 4 mit einer Halteklammer.

### Beschreibung des Ausführungsbeispiels

In Figur 1 ist ein tragbares Funkgerät 3 dargestellt, an dessen Antennenausgang ein Adapter 1 befestigt ist, wobei dem Adapter 1 eine Antenne 2, vorzugsweise eine Wendelantenne, folgt. Figur 2 zeigt das gleiche tragbare Funkgerät 3 in der Seitenansicht. Am Adapter 1 ist die Antennenbuchse 4 erkennbar, an die eine externe Antenne, beispielsweise eine Fahrzeugantenne kontaktierbar ist. Am oberen Teil des Adapters 1 ragt wiederum die Antenne 2 des Handfunkgerätes hinaus.

Konstruktive Einzelheiten des Adapters sind in der Figur 3 zu erkennen. Im unteren Teil des Bildes ist das Metallgehäuse 7 des tagbaren Funkgerätes 3 zu erkennen. Das tragbare Funkgerät 3 weist eine Antennenbuchse 14 auf, in die ein Schraubgewinde 17 eingebracht ist. Die Antennenbuchse 14 ist über ein isolierendes Material 16 in das Metallgehäuse 7 eingelassen. Ein Zapfen 8 des Adapters 1 ist in die Buchse 14 so weit eingeschraubt, bis die gewünschte Positionierung zu einem Kontaktfeld 20 für weitere Anschlüsse erreicht ist. Dann wird mit einer Muuter 18 gekontert.

Der Adapter selbst ist aus einem isolierenden Material 15 hergestellt. Sein Boden 19 ist jedoch aus elektrisch leitendem Material, vorzugsweise Metall. In den Boden 19 ist ein Schaltkontakt 6 eingelassen, der mit einer metallischen Buchse 13 des Adapters in Verbindung steht. Die metallische Buchse 13 weist ebenfalls ein Gewinde auf, wobei dieses Gewinde gleich ist, wie das Gewinde der Buchse 14. In die Buchse 13 ist das Schraubgewinde 10 der Antenne 2 eingeschraubt. Das Einschrauben erfolgt dabei so weit, bis ein an der Antenne angebrachter Antennenfuß 9 auf dem oberen Teil des Gehäuses am isolierenden Material 15 des Adapters aufliegt. Auf der linken Seite des Adapters ist eine Antennenbuchse 4 eingebracht, die einen Außenkontakt 12 aufweist und aus metallischem Material gebildet ist. Am Ende der Antennenbuchse liegt der Schaltkontakt 6, der im Ruhezustand eine leitende Verbindung zwischen der Buchse 13 und dem Zapfen 8 des Adapters herstellt. Weiterhin ist an einen Außenkontakt 12 der Antennenbuchse 4 ein Federteil 11 angeschlossen, das im eingeschraubten Zustand des Adapters am metallischen Gehäuse 7 anliegt.

Wird nun ein externer Antennenstecker in die Antennenbuchse 4 eingeführt, so wird der Mantel des Koaxialkabels durch die Außenseite des Antennensteckers mit dem metallischen Gehäuse 7 über die Feder 11 geerdet, während der innere Teil des Steckers den Schaltkontakt 6 nach hinten drückt, so daß die leitende Verbindung zwischen der Buchse 13 und dem Schaltkontakt 6 unterbrochen wird. Vielmehr liegt nunmehr die Spitze des Antennensteckers auf den Schaltkontakt 6, so daß dadurch eine leitende Verbindung zwischen dem Innenleiter des Koaxialkabels und der Buchse 14 des Funkgerätes hergestellt wird. Dadurch wird erreicht, daß nunmehr die Funkgeräteantenne 2 abgeschaltet ist, und statt dessen das Handfunkgerät mit einer externen Antenne betrieben werden kann. Ein so ausgestattetes tragbares Funkgerät ist daher dazu geeignet, auch als mobile Station im Fahrzeug oder aber als Feststation zu dienen. Der Adapter muß nur dann aufgebracht werden, wenn es die besonderen Betriebsbedingungen des tragbaren Funkgerätes erfordern. Da ein fest am tragbaren Funkgerät angebrachter Antennenstecker nun entfällt, ist das tragbare Funkgerät wesentlich besser gegen Umwelteinflüsse zu schützen, so daß es für den täglichen Einsatz besser geeignet ist.

In Figur 4 ist eine weitere Ausgestaltung eines Adapters 1 dargestellt. Man erkennt wiederum den Zapfen 8 des Adapters 1, der in das Funkgerät einschraubbar ist. Der Adapter selbst weist nunmehr ein im wesentlichen viereckiges, vorteilhaferweise quadratisches Adaptergehäuse 23 auf, wobei das obere und untere Teil des Adaptergehäuses 23 einen engeren Abschnitt 24 aufweist. Dieser engere Abschnitt 24 ist vorzugsweise rund ausgebildet und kann durch Abfräsen oder Abdrehen des Adaptergehäuses im oberen und unteren Bereich hergestellt werden. Im übrigen entspricht der Aufbau des Adapters 1 der in Figur 3 dargestellten Form. Der Adapter nach Figur 4 ist besonders dazu geeignet, mit einer Halteklammer versehen zu werden, die eine sichere Befestigung des Antennenkabels an der Antennenbuchse 4 des Adapters erlaubt.

Einzelheiten der Halteklammer für den Adapter 1 sind in der Figur 5 dargestellt. Die Halteklammer ist vorzugsweise aus Kunststoff hergestellt und umfaßt die Teile 25, die mit ihrem vorderen Bereich in der Lage sind, den Adapter 1 zu umfassen. An der Spitze der Teile 25 sind Nasen 26 angebracht, die das Adaptergehäuse 23 umgreifen können. Die Teile 25 sind mittels eines Haltesteges 28 miteinander verbunden, so daß die Teile 25 federnd bewegt werden können. Der Haltesteg ist dabei so angebracht, daß durch Anschrägungen an der Nase 26 beim Aufschieben der Halteklammer die Teile 25 auseinandergedrückt werden, und so das Adaptergehäuse 23 umfassen können. Wird nunmehr die Halteklammer auf das Adaptergehäuse 23 aufgesteckt, so ist das Antennenkabel mit der Antennenbuchse 4 verrücksicher verbunden. Auch bei einem Betrieb des Funkgerätes mit dem Adapter in einem Kraftfahrzeug kann nun das Antennenkabel nicht versehentlich aufgrund von Erschütterungen herausfallen.

Gemäß Figur 5 ist der Haltesteg 28 vorteilhafterweise mittig angebracht, so daß die eine Seite der Teile 25 frei überstehen. Hierdurch erhält man Griffe, mittels denen die Umklammerung des Adaptergehäuses wiederum zu lösen ist. Drückt man nämlich das nicht das Adaptergehäuse 23 umfassende Ende der Teile 25 zusammen, ist eine einfache Lösung der Halteklammer vom Adaptergehäuse möglich, da durch die vordere Aufspreizung die Umklammerung des Adaptergehäuses durch die Halterklammer entfällt. Um hierbei definierte Druckkräfte zu erhalten, ist im Ausführungsbeispiel im hinteren Teil nach dem Haltesteg eine Feder 29 eingebracht, die die Druckwirkung auf das Adaptergehäuse definiert vorgibt.

Zur sicheren Führung der Halteklammer sind des weiteren Führungsnasen 31 vorgesehen, die an das Adaptergehäuse angepaßt sind. Diese greifen vorzugsweise in den oberen und unteren Abschnitt 24 des Adaptergehäuses 23 ein, der enger ausgebildet ist. Hierdurch wird erreicht, daß die Halteklammer in bezug auf das Adaptergehäuse genau positioniert wird. Hierdurch werden Verspannungen und Verklemmungen verhindert, die ansonsten beim Einführen des Steckers in die Antennenbuchse 4 bewirkt werden könnten. Denn durch diese Maßnahme wird die Halteklammer in bezug auf das Adaptergehäuse exakt positioniert. Diese Positionierung wird weiterhin durch Führungsschienen 27 erleichtert, die im Bereich des Adaptergehäuses auf den Teilen 25 angebracht sind. Die Führungsschienen 27 greifen auch dann, wenn die Führungsnasen 31 noch nicht im Bereich des Adapters angebracht sind. Bereits die Einführung der Klammer auf das Adaptergehäuse wird daher durch diese Maßnahme wesentlich erleichtert. Das Antennenkabel 30 wird, wie bereits erwähnt, durch den Haltesteg 28 hindurchgeführt und wird durch die Feder 29, die in eine Nut 34 am Antennenkabel einrastet, gesichert bzw. am herausfallen gehindert.

Die Feder erfüllt somit eine Doppelfunktion. Einmal sichert sie das Antennenkabel, andererseits bewirkt sie eine definierte Druckkraft auf das Adaptergehäuse.

## Patentansprüche

1. Adapter für ein tragbares Funkgerät, der an den Antennenausgang des Funkgerätes (3) angeschlossen wird, dadurch gekennzeichnet, daß an den Adapter eine tragbare Funkantenne (2) anschließbar ist und daß der Adapter (1) eine Antennenbuchse (4) für eine externe Antenne aufweist.

2. Adapter nach Anspruch 1, dadurch gekennzeichnet, daß der Adapter einen Zapfen (8) aufweist, der in eine Buchse (14) zur Aufnahme der Antenne des Funkgerätes (3) einbringbar ist.

3. Adapter nach Anspruch 2, dadurch gekennzeichnet, daß der Zapfen ein Gewinde aufweist.

4. Adapter nach einem der vorhergehenden Ansprüche, dadurch gekennzeichnet, daß der Anschluß für die tragbare Funkantenne (2) dem Anschluß für das Funkgerät (3) gegenüberliegend angeordnet ist.

5. Adapter nach einem der vorhergehenden Ansprüche, dadurch gekennzeichnet, daß durch das Einführen eines Steckers in die Antennenbuchse (4) die Verbindung zwischen dem Anschluß für die tragbare Funkantenne (2) und dem Anschluß für das Funkgerät (3) unterbrechbar ist.

6. Adapter nach Anspruch 5, dadurch gekennzeichnet, daß ein Schaltkontakt (6) vorgesehen ist, gegen den die Steckerspitze des in die Antennenbuchse (4) eingebrachten Steckers zur Unterbrechung der Verbindung zwischen der tragbaren Funkantenne (2) und dem Funkgerät (3) drückt.

7. Adapter nach Anspruch 6, dadurch gekennzeichnet, daß der Schaltkontakt (6) als Federelement ausgebildet ist.

8. Adapter nach einem der vorhergehenden Ansprüche, dadurch gekennzeichnet, daß vom Adapter (1) eine Feder (11) weggeführt ist, die mit dem metallischen Außenkontakt (12) der Antennenbuchse (4) in Verbindung steht.

9. Adapter nach einem der vorhergehenden Ansprüche, dadurch gekennzeichnet, daß der Adapter eine Buchse (13) aufweist, in die die tragbare Funkantenne (2) einbringbar ist.

10. Adapter nach Anspruch 9, dadurch gekennzeichnet, daß die Buchse ein Gewinde (10) aufweist.

11. Adapter nach einem der vorhergehenden Ansprüche, dadurch gekennzeichnet, daß das Adaptergehäuse (23) viereckig ausgebildet ist und im oberen und unteren Bereich einen vorzugsweisen runden engeren Abschnitt (24) aufweist.

12. Halteklammer für einen Adapter nach einem der vorhergehenden Ansprüche, dadurch gekennzeichnet, daß die Halteklammer (2) federnd mit einem Haltesteg (28) miteinander verbundene Teile (25) aufweist, die um den Adapter (1) schiebbar sind und mittels Nasen (26) den Adapter (1) Klammern und Mittel (32, 33) zur Halterung eines Antennenkabels (30) aufweisen.

13. Halteklammer nach Anspruch 12, dadurch gekennzeichnet, daß der Haltesteg (28) der Teile (25) in etwa mittig angebracht ist und daß auf der nichtklammernden Seite der Teile (25) eine Druckfeder (29) eingebracht ist.

14. Halteklammer nach Anspruch 12 oder 13, dadurch gekennzeichnet, daß an den engeren Abschnitt (24) angepaßte Führungsnasenn (31) an dem Haltesteg (28) angebracht sind.

15. Halteklammer nach einem der Ansprüche 12 bis 14 , dadurch gekennzeichnet, daß die Teile (25) im Bereich des Adapters (1) seitliche Führungsschienen (27) aufweisen.

16. Halteklammer nach einem der Ansprüche 12 bis 15, dadurch gekennzeichnet, daß die Mittel (32, 33) zur Halterung des Antennenkabels (30) eine Nut (33) in den Teilen (25) aufweisen, in die eine Wulst eines Steckers (32) des Antennenkabels einrastet und daß die Nut im Bereich des Haltestegs (28) angebracht ist.
